# EUROPEAN PATENT SPECIFICATION

(11) **EP 2 736 140 B1**
(45) Date of publication and mention of the grant of the patent: **17.05.2017**
(21) Application number: 13193822.7
(22) Date of filing: 21.11.2013
(51) Int. Cl.: H02J 3/18, H02J 3/16

(54) **Adjustable reactive power compensator for power networks**
Einstellbarer Blindleistungskompensator für Energieversorgungsnetze
Compensateur de puissance réactive réglable pour réseaux d'énergie

(30) Priority: 22.11.2012 FI 20126226
(43) Date of publication of application: 28.05.2014
(73) Proprietor: ABB Schweiz AG, 5400 Baden (CH)
(72) Inventor: Tuomisto, Timo, 65320 Vaasa (FI)
(74) Representative: Kinnunen, Kari Tapio

(56) References cited:
- WO-A-19/9962162
- WO-A1-2007/111541
- GB-A- 568 689
- US-A- 5 900 723

## Description

### FIELD

The present invention relates to reactive power compensators for use in transmission or distribution power networks, especially to a system wherein the voltage over the reactor or capacitor bank is adjusted by an autotransformer.

### BACKGROUND

Depending of the character of a total load in a power transmission or distribution network, typically a reactive power, capacitive or inductive exists. Overhead line itself represents inductive reactance but underground cabling, which is an increasing trend today, creates capacitive reactive power to the power network. Typically in a commercial contract a certain window is allowed for reactive power [Q], e.g. like max 4% capacitive or 16% inductive power calculated of effective power [P].

A reactive power compensation arrangement is to keep a relative reactive power in a required window and keeping it as low as possible would decrease costs charged for reactive power. The reactive power is varying and therefore a need for adjustable reactive power compensators exists. A reactor or capacitor bank can be measured to create reactive power enough, but then we have a risk of over-compensation.

A capacitor bank could comprise several capacitors equipped with a circuit breaker enabling to connect a capacitor parallel to each other in a capacitor bank depending of the need for capacitive compensation. A drawback is a need for several circuit breakers or otherwise only few adjusting steps.

A shunt reactor could have a movable iron core enabling to adjust its inductance depending of the need for inductive compensation. A drawback there is a more complex structure compared to a fixed reactor.

WO 97/22169 discloses a reactive power compensating device with (capacitive or inductive) reactive bank supplied via an adjustable autotransformer. A compensating reactive power created is relative to the voltage over the reactive bank.

An autotransformer with secondary windings equipped with an on-load tap-changer gives several steps to adjust the compensating ratio and by a reversing switch the amount of the steps could be doubled.

Still there is a remarkable disadvantage because the secondary winding of the autotransformer is connected to the live first end of its primary winding.

First of all, it is challenging to design and build this kind of autotransformer with secondary windings connected live first end to handle surge voltages without a risk to break down. Depending of the standard to follow, surge test voltage for 110kV autotransformer could be e.g. 550kV at input terminals, but from the second ends of the secondary windings to earth the voltage could rise even up to 900kV.

Another disadvantage on a three phase system is that three separate one-phase tap changers are to be used because of the high voltage between the secondary windings of an autotransformer.

Further, in a case that a plus/minus switching is used instead of linear switching for the tap changer, voltage of the reactor or capacitor live first end reaches higher level than the nominal phase voltage of the network. The voltage of the second end of secondary winding is proportional to the ratio of autotransformer. Therefore a requirement for the dielectric strength of components like the autotransformer itself and the reactive bank, reactor or capacitor bank is in practice tenths of per cent higher, accordingly.

WO 2007/111541 A1 discloses a device and method for control of power flow in a transmission line. The device comprises a shunt transformer supplying a series transformer. Further the device has a controllable reactance unit.

Finally, IEC 60076-5 standard, dealing with ability to withstand short circuits in power transformers says that if a component (like a reactor or a capacitor bank here) is connected externally i.e. outside of the transformer tank, the short circuit current should be limited in a transformer by series reactance.

### SUMMARY

An object of the present invention is to provide a reactive power compensator so as to alleviate the above disadvantages. The object of the invention is achieved with the invention, which is defined in the independent claim. Some embodiments are disclosed in the dependent claims.

The present invention provides an important advantage in that dimensioning of an autotransformer due to surge voltages is easier to do and less insulation material is needed but also shorter clearance from live parts to earthed parts is enough because of lower voltages allowing smaller housing for autotransformer. Another advantage is that less expensive, a combined three-phase on-load tap changer type could be used because of lower voltage difference between secondary windings of phases. In a case of external reactor and/or capacitor bank, ability to withstand short circuits could be arranged easily by supplying reactive components by a tap arranged in each primary winding. Further advantage is ability to automatically compensate both, capacitive or inductive reactive power by one reactive power compensator arrangement comprising both, a reactor and a capacitor bank connectable by a circuit breaker.

### DRAWINGS

In the following, the invention will be described in greater detail by means of some embodiments with reference to the accompanying drawings, in which
Figure 1 shows a principal circuit diagram of reactive power compensator for three phase power network according to the invention.
Figure 2 shows a circuit diagram of reactive power compensator with an on-load tap changer and external reactor and capacitor banks.

### DETAILED DESCRIPTION

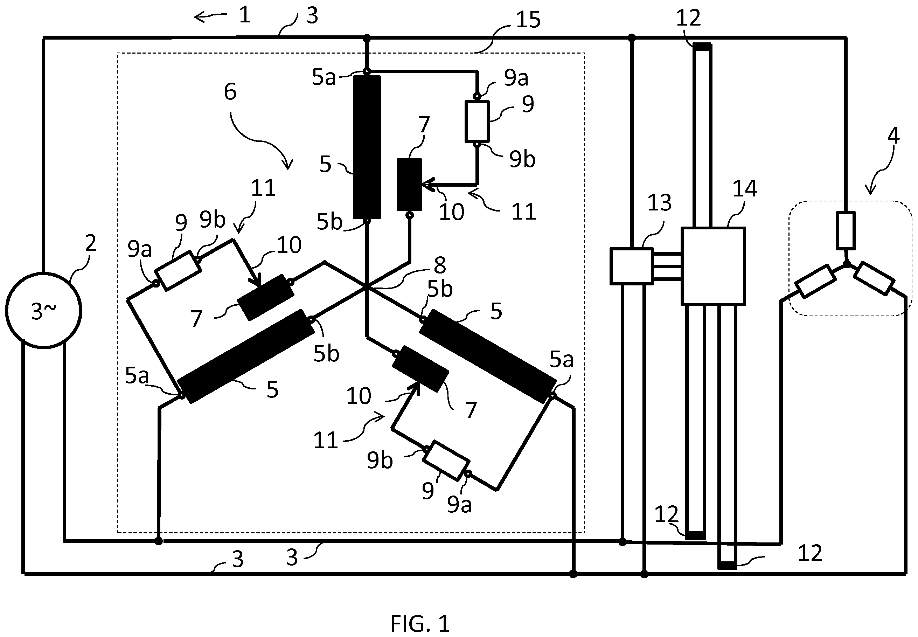

Figure 1 shows a principal circuit diagram of a reactive power compensator for three phase power network according to the invention. A transmission or distribution network 1 is supplied by an AC power source 2. The supplying network has a live line lead 3 for each three phases to supply a load 4. An autotransformer 6 comprises a pair of primary winding 5 and a secondary winding for each phase. The first end 5a of the primary winding 5 of an autotransformer 6 is connected to a line lead 3. The second ends 5b of the primary windings 5 are star-connected to each other to form a star-point 8. The secondary windings 7 of the autotransformer are connected to the star-point 8. The reactive power compensator comprises at least one reactive component 9 for each pair of primary and secondary winding. An inductor as a reactive component 9 is for compensating capacitive reactive power and a capacitor for compensating inductive reactive power. A first pole 9a of a reactive component 9 is connected to the first end 5a of the primary winding 5, which is connected to a phase voltage of the live line lead 3. Second pole 9b of the reactive component 9 may be connected directly to the tap 7.1 - 7.5 of the secondary winding 7 or to the slide contact 10 of an on-line tap-changer 11. The tap-changer may be a linear type allowing only decreasing the voltage over the reactive component 9 from the nominal phase voltage of the power network 1. Current transformers 12 or current sensors and a three phase voltage transformer 13 or voltage sensors are connected to a control device 14. Control device 14 is for measuring the voltages, currents and to define a phase angle between voltage and current. Depending of the need for compensative reactive power the control device adjusts the voltage over the reactive component 9.

In practice the figure 1 represents a case where reactive component 9 is a reactor, immersed in a same tank 15 with an autotransformer 6 and no arrangement to improve the ability to withstand a short circuit is needed in a transformer itself.

The maximum voltage of any part of the reactor to earth is equal with the voltage of the power network stating the requirement of the insulation level for the reactor.

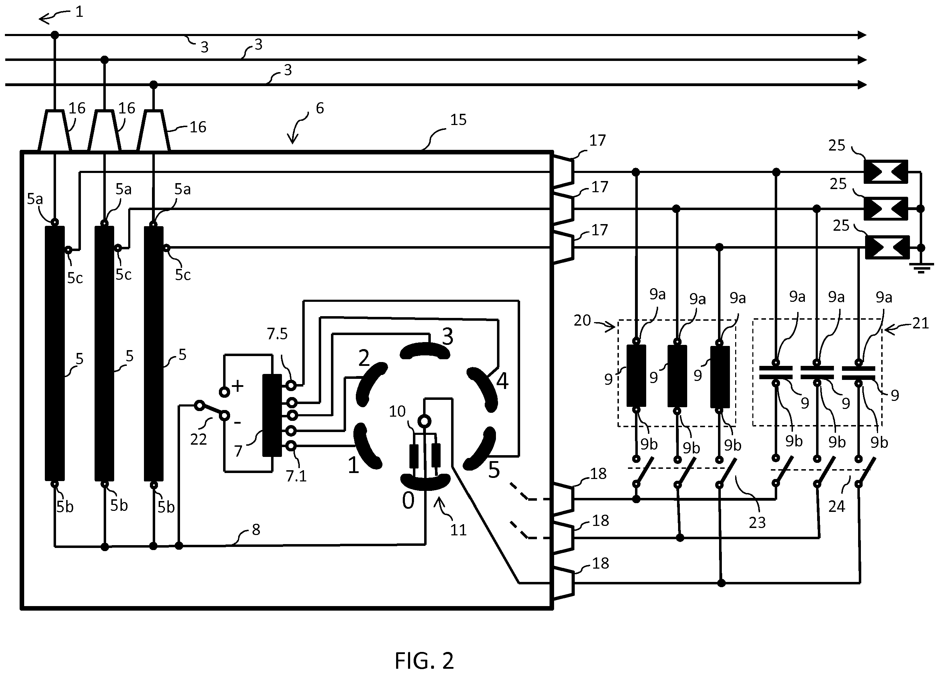

Figure 2 shows a circuit diagram of three phase reactive power compensator with an autotransformer equipped with an on-load tap changer and an external three-phase reactor and a capacitor bank. A capacitor bank comprises at least one capacitor for each phase, but several capacitors could be connected parallel.

An autotransformer 6 with an on-line tap-changer 11 is immersed in a tank 15. The first end 5a of a primary winding 5 is connected to the line lead 3 via a wire through a bushing insulator 16. The second ends 5b of primary windings are connected to each other to form a star-point 8.

To fulfil the requirements for ability to withstand a short circuit, taps 5c are arranged on the primary windings 5 to supply a voltage to an external reactor 20 and/or a capacitor bank 21. The upper part of the primary winding 5 between the first end 5a and the tap 5c serves as a current limiting reactance. External reactor 20 and/or capacitor bank 21 supply wires go out of the tank through bushing insulators 17.

An on-line tap-changer 11 has a slide contact 10 making a contact with fixed contacts 11.1 to 11.5 which are connected to taps 7.1 to 7.5 of secondary winding 7, correspondingly. It is clear to the man skilled in the art that on-line tap-changer (11) may comprise different number of contacts corresponding to the number of taps of secondary winding (7) to have a desired number of adjusting steps. The tap changer may be equipped with a selector switch 22 allowing a plus/minus function giving a double number of steps. The selector switch 22 is cross-locked in a way that it could be changed from a first position to a second position or vice versa only at a zero (11.0) position of a tap-changer 11. The slide contact 10 is connected to the star-point on zero (11.0) position.

The supply voltage to the first pole (9a) of a reactive component 9 of a reactor 20 or a capacitor bank 21 is a little bit lower than the phase voltage of the network, relative to the ratio of turns between the second end 5b and tap 5c compared to total turns of a winding 5.

That supply voltage states the required insulation level from live parts of the reactor 20 or the capacitor bank 21 to earth. Still, in a case that the selector switch 22 is turned to plus (+) position, the voltage over the first and second poles (9a,9b) of the reactive component 9 may exceed the phase voltage of the power network. Dielectric strength of the component 9 is determined according to that maximum voltage.

The three phase reactor 20 is preferable an i-i-i-type with each first and second poles (9a,9b) connectable separately and the capacitor bank 21 has also each first and second poles (9a,9b) floating and not connected to the earthed body of the capacitor for making possible free connections of both first and second poles (9a,9b) of each reactive component 9.

The reactive power compensator may have only a reactor 20 or a capacitor bank 21, or both depending on which type of compensating might be needed.

On certain circumstances e.g. if a large amount of underground power line should be connected out of the system, the need for inductive compensation could turn to a need for capacitive compensation. To handle this kind of changes in the power network, the reactor 20 is equipped with a circuit breaker 23 and the capacitor bank 21 with a circuit breaker 24, both controlled by a control device 14. On a balance situation, both circuit breakers (23,24) are open. When control device detects an unbalance, one of the two circuit breakers (23,24) is closed to connect reactor 20 or capacitor bank 21 to the slide contacts 10 of the on-line tap-changer 11. The connecting wires are connected through bushing insulators 18. Most likely is to start with a minimum compensation ratio, which means that control device turns the selector switch 22 to minus (-) position and tap-changer to position 5. To increase compensation ratio, tap-changer is turned step-by-step from 5 to 0. At 0-position the selector switch 22 is able to be turned to positive (+) position and tap-changer is turned from 0 to 1 and finally, if needed, step-by-step to position 5, representing the maximum compensation. Control device 14 takes care of these control actions.

Non-linear resistor type arresters 25 may be connected between the live first poles (9a) of the reactive components (9) of reactor 20 or capacitor bank 21 to earth to protect the reactive components 9 of overvoltage spikes.

Only one of the three secondary windings 7 and a part for one phase of the tap-changer 11 with selector switch 22 have been shown in figure 2, but it is clear that corresponding components for all three phases are there.

The compensator could be used for any symmetric, like a six-phase power network by adding phase specific components.

It will be obvious to a person skilled in the art that, as the technology advances, the inventive concept can be implemented in various ways. The invention and its embodiments are not limited to the examples described above but may vary within the scope of the claims.

## Claims

1. A reactive power compensator for an electric power transmission or distribution network comprising reactive components (9) for compensating reactive power and an autotransformer (6) with pairs of primary windings (5) and secondary windings (7), the primary windings being star-connected to form a star-point (8) and being connectable to power lines (3), the secondary windings (7) being connected to the star-point (8) of the autotransformer (6) and being connectable to second poles (9b) of the reactive components (9), **characterized in that** first poles (9a) of the reactive components (9) are connected to first ends (5a) or taps (5c) of the primary windings (5).

2. A reactive power compensator according to claim 1, **characterized in that** it comprises a reactor (20) comprising at least one reactive component (9) per phase, the reactive component (9) being an inductor.

3. A reactive power compensator according to claim 1, **characterized in that** it comprises a capacitor bank (21) comprising at least one reactive component (9) per phase, the reactive component (9) being a capacitor.

4. A reactive power compensator according to any preceding claims, **characterized in that** the autotransformer (6) comprises an on-line tap-changer (11) for providing a variable voltage over the reactive components (9).

5. A reactive power compensator according claim 4, **characterized in that** it comprises a control device (14) for controlling the on-line tap-changer (11).

6. A reactive power compensator according to any preceding claims, **characterized in that** a reactor (20) is connectable to the secondary windings (7) by a circuit breaker (23).

7. A reactive power compensator according to any preceding claims, **characterized in that** a capacitor bank (21) is connectable to the secondary windings (7) by a circuit breaker (24)

8. A reactive power compensator according claims 6 or 7, **characterized in that** it comprises a control device (14) for controlling at least one circuit-breaker (23,24).

9. A reactive power compensator according to any preceding claims, **characterized in that** the reactive components (9) are immersed in a tank of autotransformer (6).

## Patentansprüche

1. Blindleistungskompensator für ein Netz zur Übertragung oder Verteilung von elektrischer Energie, das reaktive Komponenten (9) zur Kompensation von Blindleistung und einen Autotransformator (6) mit Paaren primärer Wicklungen (5) und sekundärer Wicklungen (7) umfasst, wobei die primären Wicklungen in Stern geschaltet sind, um einen Sternpunkt (8) zu bilden, und mit Energieversorgungsleitungen (3) verbindbar sind, wobei die sekundären Wicklungen (7) mit dem Sternpunkt (8) des Autotransformators (6) verbunden sind und mit zweiten Polen (9b) der reaktiven Komponenten (9) verbindbar sind, **dadurch gekennzeichnet, dass** erste Pole (9a) der reaktiven Komponenten (9) mit ersten Enden (5a) oder Abgriffen (5c) der primären Wicklungen (5) verbunden sind.

2. Blindleistungskompensator gemäß Anspruch 1, **dadurch gekennzeichnet, dass** er einen Reaktor (20) umfasst, der wenigstens eine reaktive Komponente (9) pro Phase umfasst, wobei die reaktive Komponente (9) eine Induktivität ist.

3. Blindleistungskompensator gemäß Anspruch 1, **dadurch gekennzeichnet, dass** er eine Kondensatorbatterie (21) umfasst, die wenigstens eine reaktive Komponente (9) pro Phase umfasst, wobei die reaktive Komponente (9) ein Kondensator ist.

4. Blindleistungskompensator gemäß einem der vorstehenden Ansprüche, **dadurch gekennzeichnet, dass** der Autotransformator (6) einen Laststufenschalter (11) zum Bereitstellen einer variablen Spannung über die reaktiven Komponenten (9) umfasst.

5. Blindleistungskompensator gemäß Anspruch 4, **dadurch gekennzeichnet, dass** er eine Steuervorrichtung (14) zum Steuern des Laststufenschalters (11) umfasst.

6. Blindleistungskompensator gemäß einem der vorstehenden Ansprüche, **dadurch gekennzeichnet, dass** ein Reaktor (20) über einen Leistungsschalter (23) mit den sekundären Wicklungen (7) verbindbar ist.

7. Blindleistungskompensator gemäß einem der vorstehenden Ansprüche, **dadurch gekennzeichnet, dass** eine Kondensatorbatterie (21) über einen Leistungsschalter (24) mit den sekundären Wicklungen (7) verbindbar ist.

8. Blindleistungskompensator gemäß Anspruch 6 oder 7, **dadurch gekennzeichnet, dass** er eine Steuervorrichtung (14) zum Steuern wenigstens eines Leistungsschalters (23, 24) umfasst.

9. Blindleistungskompensator gemäß einem der vorstehenden Ansprüche, **dadurch gekennzeichnet, dass** die reaktiven Komponenten (9) in einen Tank des Autotransformators (6) eingetaucht sind.

## Revendications

1. Compensateur de puissance réactive pour réseau de transmission ou de distribution de puissance électrique comprenant des composants réactifs (9) pour compenser une puissance réactive et un autotransformateur (6) à paires d'enroulements primaires (5) et d'enroulements secondaires (7), les enroulements primaires étant connectés en étoile pour former un point étoile (8) et pouvant être connectés à des lignes d'énergie (3), les enroulements secondaires (7) étant connectés au point étoile (8) de l'autotransformateur (6) et pouvant être connectés à des seconds pôles (9b) des composants réactifs (9), **caractérisé en ce que** des premiers pôles (9a) des composants réactifs (9) sont connectés à des premières extrémités (5a) ou prises (5c) des enroulements primaires (5).

2. Compensateur de puissance réactive selon la revendication 1, **caractérisé en ce qu'**il comprend un réacteur (20) comprenant au moins un composant réactif (9) par phase, le composant réactif (9) étant une bobine d'induction.

3. Compensateur de puissance réactive selon la revendication 1, **caractérisé en ce qu'**il comprend un bloc de condensateurs (21) comprenant au moins un composant réactif (9) par phase, le composant réactif (9) étant un condensateur.

4. Compensateur de puissance réactive selon l'une quelconque des revendications précédentes, **caractérisé en ce que** l'autotransformateur (6) comprend un changeur de prise sur ligne (11) pour fournir une tension variable sur les composants réactifs (9).

5. Compensateur de puissance réactive selon la revendication 4, **caractérisé en ce qu'**il comprend un dispositif de commande (14) pour commander le changeur de prise sur ligne (11).

6. Compensateur de puissance réactive selon l'une quelconque des revendications précédentes, **caractérisé en ce qu'**un réacteur (20) peut être connecté aux enroulements secondaires (7) par un disjoncteur (23).

7. Compensateur de puissance réactive selon l'une quelconque des revendications précédentes, **caractérisé en ce qu'**un bloc de condensateurs (21) peut être connecté aux enroulements secondaires (7) par un disjoncteur (24).

8. Compensateur de puissance réactive selon la revendication 6 ou 7, **caractérisé en ce qu'**il comprend un dispositif de commande (14) pour commander au moins un disjoncteur (23,24).

9. Compensateur de puissance réactive selon l'une quelconque des revendications précédentes, **caractérisé en ce** les composants réactifs (9) sont immergés dans une cuve de l'autotransformateur (6).
